# EUROPEAN PATENT APPLICATION

(11) **EP 2 611 070 A1**
(43) Date of publication of application: **03.07.2013**
(21) Application number: 11306789.6
(22) Date of filing: 28.12.2011
(51) Int. Cl.: H04L 12/24, H04L 29/08, H04W 8/18, H04L 29/06, H04W 12/10

(54) **Method for establishing secure card history and audit for property hand-over**

(71) Applicant: Gemalto SA, 92190 Meudon (FR)
(72) Inventor: Girard, Pierre, 92190 Meudon (FR); Maunier, Gérald, 92190 Meudon (FR)

(57) **Abstract**

The present invention relates to a method for establishing secure history and audit of an integrated circuit card (10) comprising an audit register (20), for property hand-over, characterized in that it comprises the following steps:
● storing in the audit register (20) of said integrated circuit card (10) remote actions performed on said integrated circuit card (10);
● computing a hash function of the content of said audit register (20) of said integrated circuit card (10) and remote actions content, and storing the result of said hash function in said audit register (20) of said integrated circuit card (10);
● storing on a remote server (30) an audit log (41) of remote actions performed on said integrated circuit card (10); and
● verifying the integrity of said audit log (41) stored on said remote server (30) by comparing the content of said audit register (20) of said integrated circuit card (10) and the result of a computed hash function of said audit log (41).

## Description

### FIELD OF THE INVENTION

The present invention relates to a method for establishing secure card history and audit for property hand-over.

The present invention notably concerns the machine-to-machine market, where there is a market requirement to transfer a UICC (*"Universal Integrated Circuit Card")* from one mobile network operator to another one.

The present invention also concerns the use case where an eSIM in a mobile is transferred to another user belonging to another operator.

### BACKGROUND OF THE INVENTION

Today, when an integrated circuit card used for mobile telecommunications is produced, it is personalized in factory and then sent to the mobile network operator and used by a user in a mobile phone.

If the user wishes to subscribe to another mobile network operator, he or she will receive and then use a new integrated circuit card provided by the second network operator.

Now, the integrated circuit cards can also be personalized outside a factory, for instance when they are used in a car and soldered into an electronic card. In this case, the cards are remotely personalized through the Internet and through a VPN (Virtual Private Network), when the country of sale of the car is known.

In both above-mentioned cases, the personalization only occurs once.

The mobile network operators have recognized the need for allowing changing subscription during the life of an integrated circuit card or UICC.

Today, no solution exists to change a mobile network operator without changing the integrated circuit card.

A typical use case is the case where a car manufacturer launches a call for tender each year for the GSM or 3G connectivity of all its cars already in use. If selected operator is different, there is a need to change the subscriptions and to re-personalize all the cards already in use.

When an integrated circuit card used for mobile telecommunications or UICC *("Universal Integrated Circuit Card")* is managed by a mobile network operator, its content can be managed over-the-air (OTA) over the time. In particular, it is possible to modify the files, managed using RFM or Remote File Management, and to load or delete applications, managed using RAM or Remote Applet Management.

When the integrated circuit card or UICC is handed-over to a new mobile network operator (or MNO), it is of paramount importance for this mobile network operator to check the exact state of the integrated circuit card. However, there is currently no way to obtain the content of a given card or to obtain a trustable history of all files (RFM) and applications (RAM) operations on said card.

An existing problem is the following: how a new mobile network operator (MNO) can be sure in a trustable way about the content of the pool of integrated circuit cards (or UICCs) handed-over from the previous mobile network operator (MNO)?

A possible solution to this technical problem would be to implement a card dump to obtain the card image, but this is not satisfactory in terms of security and performance.

### SUMMARY OF THE INVENTION

The present invention aims at solving the above-mentioned drawbacks of the prior art solutions.

The present invention is defined, in its broadest sense, as a method for establishing secure history and audit of an integrated circuit card comprising an audit register, for property hand-over, characterized in that it comprises the following steps:
● storing in an audit register of said integrated circuit card remote actions performed on said integrated circuit card;
● computing a hash function of the content of incoming management actions of said integrated circuit card, and storing the result of said hash function in said audit register of said integrated circuit card; the storage of said computed hash is done in a way as it is not possible to tamper with its content, for example by hashing previous content with new computed hash.
● storing on a remote server an audit log of remote actions performed on said integrated circuit card; and
● verifying the integrity of said audit log stored on said remote server by comparing the content of said audit register of said integrated circuit card and the result of a computed hash function of said audit log.

Therefore, the method according to the present invention provides the following advantages:
● The card content can be known and trusted at each time of its life.
● There is no security threatening or bandwidth consuming command.
● The onboard memory consumption and processing is minimal.

Preferably, said integrated circuit card is used for mobile telecommunications.

According to an embodiment, said audit log stored on said remote server is provided by a first mobile network operator.

Advantageously, said step of verifying the integrity of said audit log stored on said remote server is performed by a second mobile network operator.

According to an embodiment, said audit log is stored in a database.

According to another embodiment, said audit log is stored in a file storage system.

According to an embodiment, said remote actions are described as:
● Administration Application Identifier;
● Action type; and
● Action parameters.

According to an embodiment, said remote actions comprise the modification of a file (RFM or Remote File Management).

According to an embodiment, said remote actions comprise the loading or the deletion of applications (RAM or Remote Applet Management). Said remote actions also comprise any command changing any other critical card content.

Advantageously, said audit log is translated by a card simulator into a card state.

According to an embodiment, said audit register of said integrated circuit card is signed by said integrated circuit card.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

The following detailed description will be better understood with the drawings, in which:
Figure 1 represents the different technical elements involved in the method according to the present invention;
Figure 2 shows an example of use of the method according to the present invention.

### DETAILED DESCRIPTION OF THE EMBODIMENTS OF THE INVENTION

The same elements have been designated with the same reference numerals in the different drawings. For clarity, only those elements and steps which are useful to the understanding of the present invention have been shown in the drawings and will be described. In other instances, well known structures, devices or algorithms have not been described in detail so not to unnecessarily obscure the present invention.

It may be recalled that, in the description, when an action is attributed to a microprocessor, an application or to a device comprising a microprocessor, this action is performed by the microprocessor controlled by instruction codes recorded in a memory of this device.

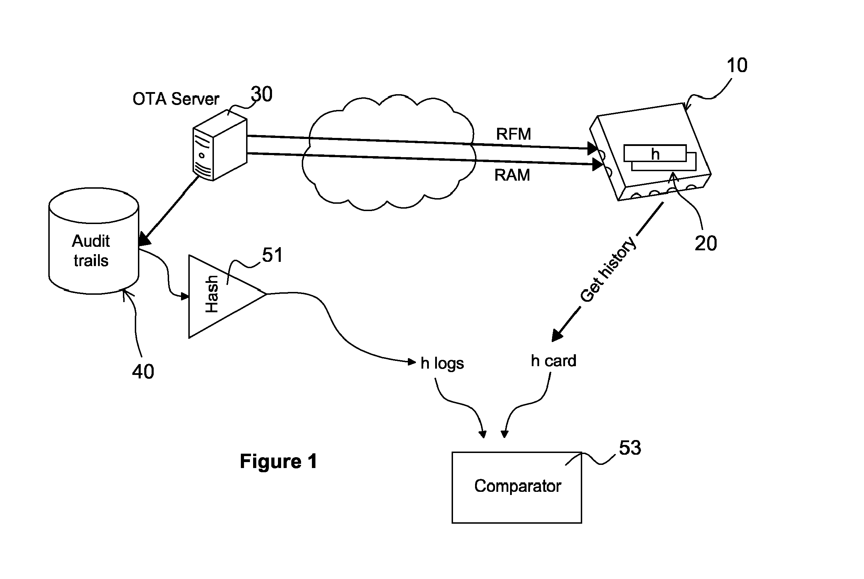

Figure 1 represents the different technical elements involved in an embodiment according to the present invention.

RFM and also RAM are standard mechanisms defined for doing remote file management (RFM) and remote applet management. RFM and RAM allow the network operator to manage remotely the SIMcard hold by customer inside their mobile phone.

Remote actions (RAM or RFM) are performed on the integrated circuit card 10 over-the-air (OTA), or via any communication channel by a remote server 30.

It is recalled that we suppose in this invention that the initial card state is available from a trusted source (for example the card manufacturer or the entity in charge of the first card personalization).

Each time remote administrative action is performed in the integrated circuit card 10, it is logged in an audit register 20.

An action is described as:
● Administrative Application Identifier
● Action type
● Action parameters

For instance: RAM InstallApplication AID AppletByteCodeHash.

The audit register 20 is a memory. This memory is preferably located into the card. As the integrated circuit card 10 cannot store unlimited number of plain text log entries, they are hashed in a cumulative audit register 20:
AuditRegister = Hash (AuditRegister+Action)

Therefore, on the side of the integrated circuit card 10, all the RFM and RAM commands are hashed and accumulated in at least one audit register 20.

On the side of the server 30, all RAM (Remote Applet Management) and RFM (Remote File Management) on the integrated circuit card 10 are logged (i.e. the exact command content and optionally APDU - Application Protocol Data Unit - exchanged with the integrated circuit card 10) into a database 40 of the server.

The Remote Server 30 is responsible for providing lisible audit log, whose integrity can be checked by comparing the content of the audit register 20 of the integrated circuit 10 and computed hash on the clear text audit log.

When a mobile network operator (MNO) wants to be sure about the card content, it can obtain the current hash value from the card and compute the hash of the logs stored on the server side. If the two hashes match, the logs can be trusted and used to understand the card content. A card simulator or any other software can optionally be used to translate this log into a card state.

To ensure confidentiality of exchanges performed by the first mobile network operator MN01 (applet byte code, secrets,...), RAM and RFM applets can omit these data in the audit trail. In this case, the second mobile network operator MN02 is not able to analyze MN01 installed Applet but as installation event & associated AID are logged, he can still remove it.

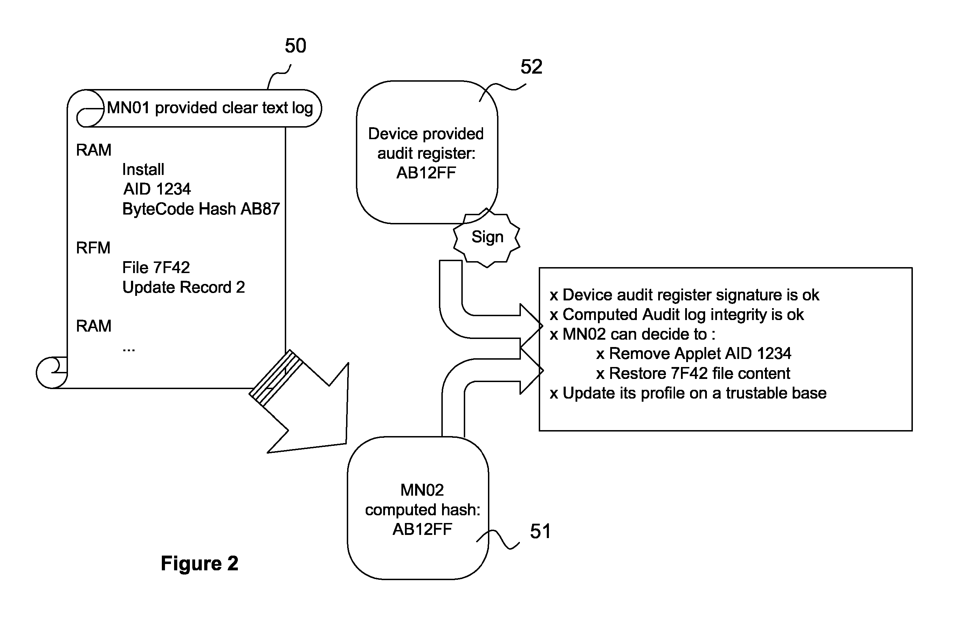

Figure 2 shows an example of use of the method according to an embodiment of the present invention.

As represented on Figure 2, the first mobile network operator MN01 stores clear text log 50 into the database 40 of audit trails. The audit log represents all the actions that have been performed on the card. In the example, there was an action of RAM (Remote Applet Management) type. An applet, identified under the name "1234" has been installed. The bytecode of the applet is Hash AB87. Then, there was an action of RFM (Remote File Management) type: the file named "7F42" has been updated, and the record of the file has been modified. Then, there was another action of RAM type.

When the second network operator MN02 receives the card, the second network operator MN02 sends a request of audit log to the first network operator MN01. In response, the first network operator MN01 transmits to the second network operator MN02 the audit log requested. Then, the second network operator MN02 computes at step 51 a hash value thanks to a well known hash function of the audit log.

In the example, the result of the hash function is: AB12FF. The second network operator MN02 sends a request of audit log to the card 10. In response the card 10 retrieves into its audit register the hash value of the corresponding audit log. The card provides the hash value to the second network operator MN02. In another embodiment, the hash value is signed by the card before sending it to the second network operator MN02.

In another embodiment, the second network operator MN02 retrieves directly the audit log into the audit register from the card that he has received.

Next, the second network operator MN02 compares at step 52 the hash value calculated at step 51 and the hash valued provided by the card 10. If the hash value from the card corresponds to the calculated hash value at step 51, the second mobile network operator MN02 can trust the information stored into the database 40 and provided to him by the first network operator MNO1, and can then decide to remove the applet that had been installed and/or restore the content of the file that had been modified.

Otherwise, the hash value from the card does not correspond to the calculated hash value and the second network operator MN02 cannot trust the information provided to him by the first network operator MNO1.

Optionally, the second mobile network operator MN02 can retrieve the content of the applets installed on the card and the content of the files.

The above specification, examples and drawings provide a complete description of the method according to the present invention. Since many embodiments of the invention can be made without departing from the spirit and scope of the invention, the invention resides in the claims herein after appended.

## Claims

1. Method for establishing secure history and audit of an integrated circuit card (10) comprising an audit register (20), for property hand-over, **characterized in that** it comprises the following steps:
● storing in the audit register (20) of said integrated circuit card (10) remote actions performed on said integrated circuit card (10);
● computing a hash value of the content of said audit register (20) of said integrated circuit card (10) and remote actions content, and storing said hash value in said audit register (20) of said integrated circuit card (10);
● storing on a remote server (30) an audit log (50) of remote actions performed on said integrated circuit card (10); and
● verifying the integrity of said audit log (50) stored on said remote server (30) by comparing the content of said audit register (20) of said integrated circuit card (10) and the result of a computed hash valued of said audit log (41).

2. Method according to claim 1, wherein said integrated circuit card (10) is used for mobile telecommunications.

3. Method according to claim 2, wherein said audit log stored on said remote server is provided by a first mobile network operator MN01.

4. Method according to claim 2 or 3, wherein said step of verifying the integrity of said audit log stored on said remote server (30) is performed by a second mobile network operator MN02.

5. Method according to any of the preceding claims, wherein said audit log is stored into a database of the remote server.

6. Method according to any of claims 1 to 4, wherein said audit log is stored in a file storage system.

7. Method according to any of the preceding claims, wherein said remote actions are:
● Administration Application Identifier;
● Action type; and
● Action parameters.

8. Method according to any of the preceding claims, wherein said remote actions comprise:
- the modification of a file,
- the loading or the deletion of applications, and/or
- any command changing any other critical card content.

9. Method according to any of the preceding claims, wherein said audit log is translated by a card simulator into a card state.

10. Method according to any of the preceding claims, wherein said hash value stored into said audit register (20) of said integrated circuit card (10) is signed by said integrated circuit card (10).

11. A system for establishing secure card history according to any of the previous claims.
